# FASCICULE DE BREVET EUROPEEN

(11) **EP 2 705 406 B1**
(45) Date de publication et mention de la délivrance du brevet: **22.06.2016**
(21) Numéro de dépôt: 12725104.9
(22) Date de dépôt: 04.05.2012
(51) Int. Cl.: G02F 1/13357

(54) **PROCEDE DE DECONSTRUCTION D'ECRANS PLATS A CRISTAUX LIQUIDES ET LAMPES DE RETRO-ECLAIRAGE**
VERFAHREN ZUR ZERLEGUNG VON FLÜSSIGKRISTALLFLACHBILDSCHIRMEN UND RÜCKBELEUCHTUNGSLAMPEN
METHOD OF DECONSTRUCTING LIQUID CRYSTAL FLAT SCREENS AND BACK-LIGHTING LAMPS

(30) Priorité: 05.05.2011 FR 1153876
(43) Date de publication de la demande: 12.03.2014
(73) Titulaire: Veolia Propreté, 92000 Nanterre (FR)
(72) Inventeur: MAITROT, Aude, F-75009 Paris (FR); NAVARRO, Stéphanie, 78480 Verneuil Sur Seine (FR); GALLARD, René-Bernard, F-49480 Saint Sylvain D'Anjou (FR)
(74) Mandataire: Novagraaf Technologies
(86) Numéro de dépôt international: PCT/FR2012/050998
(87) Numéro de publication internationale: WO 2012/150422

(56) Documents cités:
- EP-A2- 1 967 875
- CN-A- 101 368 697
- JP-A- 2006 223 912
- JP-A- 2009 113 871
- US-A1- 2005 088 586
- US-A1- 2007 019 275
- US-A1- 2007 153 496

## Description

La présente invention concerne la déconstruction, c'est-à-dire le démantèlement, d'écrans plats équipés de lampes de rétro-éclairage (CCFL).

De telles lampes de rétro-éclairage contiennent du mercure. Il faut donc faire particulièrement attention à ne pas les casser c'est-à-dire qu'il faut viser à conserver leur intégrité autant que possible, ou du moins à éviter tout déversement / contact de leur contenu polluant (mercure) sur les autres éléments de l'écran, ou toute libération du polluant dans la nature. Ce qui exclut de fait toute opération de broyage même partiel d'un écran tant que celui-ci contient encore des lampes.

En effet, pour détruire ou dépolluer ces écrans plats en fin de vie, il existe des procédés industriels de broyage, au moins partiel, de ces écrans au cours desquels la dalle et/ou les lampes de rétro-éclairage (ou néons) des écrans plats sont en général détruits ou partiellement endommagés. Dès lors, de tels procédés entraînent la libération, dans l'air, sur le sol mais également directement en contact avec l'écran ou les opérateurs, de gaz et de substances toxiques, tels que le mercure par exemple. Or le mercure qui se libère a tendance à polluer les autres éléments de l'écran, par exemple le plastique qui devient alors difficilement recyclable. Ces procédés sont donc responsables d'une certaine pollution mais également d'un risque d'intoxication pour l'opérateur.

En outre, les lampes de rétro-éclairage ont une constitution en verre fin et une forme fine et allongée. Elles sont donc particulièrement fragiles et peuvent se briser facilement lors du démontage d'un écran.

Les documents de l'art antérieur relatifs au démantèlement des écrans plats focalisent sur des procédés de retrait de la dalle à cristaux liquides (LCD) des écrans, dans lesquels les éléments polluants sont aspirés et piégés dans des filtres.

Au contraire, la présente invention focalise sur le retrait des lampes de rétro-éclairage. Si un écran contient une dalle, celle-ci est donc préalablement retirée.

Par exemple, la demande de brevet JP 2009/113871, qui décrit un procédé de recyclage d'un écran LCD comprenant des tubes contenant du mercure, enseigne particulièrement une fonte thermique lorsque les tubes sont désolidarisés du fond de l'écran, tandis que dans la présente invention, la fonte thermique est effectuée alors que les tubes sont encore solidaires du fond de l'écran.

Plus précisément, l'invention concerne un procédé de déconstruction au moins partielle d'un écran plat, l'écran comprenant
des connecteurs solidaires de l'écran,
des lampes de rétro-éclairage connectées à au moins un connecteur respectif, et solidaires de l'écran par ce connecteur,
le procédé comprenant des étapes consistant à :
- lorsque l'écran comprend une dalle, retirer au préalable ladite dalle pour rendre les lampes et la plaquette apparentes, et
- désolidariser les lampes de l'écran sans les casser.

Grâce au procédé selon l'invention, la déconstruction des écrans plats est plus respectueuse de l'environnement et la santé des opérateurs.

Dans un mode de réalisation, on prévoit de retirer au moins partiellement la plaquette, lorsqu'elle existe, pour donner accès aux connecteurs.

Grâce à cette caractéristique, la désolidarisation des lampes de leur(s) connecteur(s) est grandement facilitée, tout en conservant au mieux l'intégrité des lampes.

Dans la présente invention, on prévoit en outre pour au moins une lampe en au moins un point de fonte de ladite lampe, une étape de fonte du verre constituant ladite lampe, jusqu'à séparer celle-ci en au moins deux morceaux de part et d'autre de chaque point de fonte.

De préférence, chaque point de fonte est situé à une distance prédéterminée d'une position de référence.

Dans un mode de réalisation, on prévoit en outre une étape de profilométrie laser consistant à obtenir la topographie tridimensionnelle au moins des lampes.

De préférence, l'étape de profilométrie laser comprend un balayage laser longitudinal et/ou latéral, éventuellement multiple.

Dans un mode de réalisation, l'étape de fonte est mise en oeuvre par un dispositif de chauffe au contact du tube de ladite lampe. Par exemple, on prévoit une étape de pincement thermique du verre d'au moins une lampe.

Dans un mode de réalisation, l'étape de fonte est mise en oeuvre par un dispositif de chauffe distant du tube de ladite lampe, ledit dispositif comprenant un chalumeau et/ou une bobine d'induction.

Dans un mode de réalisation, chaque lampe comprend une partie tubulaire qui présente un axe d'élongation, le procédé comprenant en outre pour chaque lampe une étape de rotation de ladite lampe autour de son axe d'élongation pendant ou après l'étape de fonte.

De préférence, l'étape de rotation est mise en oeuvre par un ensemble d'au moins trois roues en contact de ladite lampe, dont au moins une roue est motorisée.

Grâce à l'invention, le procédé de déconstruction peut être au moins semi-automatique, ce qui permet d'avoir des cadences de production élevées.

D'autres caractéristiques et avantages de la présente invention apparaîtront plus clairement à la lecture de la description suivante donnée à titre d'exemple illustratif et non limitatif et faite en référence aux figures annexées dans lesquelles :

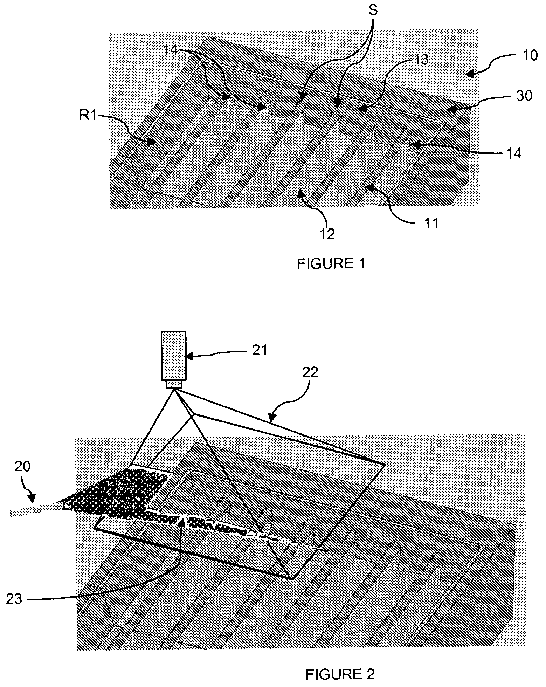

- la figure 1 illustre une vue partielle d'un écran dans lequel la dalle a été préalablement retirée pour rendre les lampes et la plaquette apparentes,
- la figure 2 illustre le principe de la profilométrie laser,
- la figure 3 illustre une coupe longitudinale d'un écran pendant une étape de profilométrie laser,
- les figures 4a à 4e et 5a à 5e illustrent la position d'un ensemble caméra-laser et l'image respective qui en résulte pendant une étape de profilométrie laser avec un balayage longitudinal,
- figures 4f à 4g et 5f à 5g illustrent la position d'un ensemble caméra-laser et l'image respective qui en résulte pendant une étape de profilométrie laser avec un balayage latéral,
- la figure 6 illustre un écran après la fonte et le retrait d'une partie des lampes, en l'espèce de la partie centrale des lampes,
- la figure 7 illustre une coupe transversale d'un mode de réalisation d'un dispositif de chauffe par induction selon l'invention, positionné autour d'une lampe,
- la figure 8 illustre le pincement thermique,
- la figure 9 illustre le résultat de l'étape de fonte du verre en au moins deux morceaux,
- la figure 10 illustre un mode de réalisation du procédé selon l'invention,
- la figure 11 illustre une coupe transversale de clips,
- la figure 12 illustre un mode de réalisation d'un ensemble d'au moins trois roues portées par une pince pour mettre en rotation une lampe autour de son axe d'élongation, et
- la figure 13 illustre un mode de réalisation d'une fourchette.

Par écran plat 10, on entend un écran de type informatique ou télévisuel comprenant à l'origine, c'est-à-dire lors de la construction et de l'utilisation de l'écran, une matrice de visualisation ou dalle LCD pour « Liquid Crystal Display » (non illustrée) sensiblement plate, et généralement en outre des filtres diffuseurs (non illustrés). Ces écrans comprennent également des lampes 11 de rétro-éclairage, ou néons, de forme au moins en partie tubulaire droite ou en U. Elles présentent un axe d'élongation et sont désignées ci-après lampes. Les lampes sont généralement parallèles et équidistantes entre elles, de sorte à avoir une répartition homogène, uniforme de la lumière. Le diamètre d'un tube de lampe est typiquement quelques millimètres de diamètre.

Les lampes renferment du mercure, on vise donc à ne pas les casser lors de la déconstruction de l'écran afin de ne pas polluer.

L'écran comprend également un fond 12, généralement en plastique et sensiblement plat, sous forme de feuille réfléchissante. Le fond 12 est solidaire de l'écran 10, et blanc pour réfléchir au mieux la lumière des lampes vers la dalle LCD. Les lampes 11 sont disposées selon un plan parallèle au fond 12 et disposées à l'origine entre le fond et la dalle LCD. Elles sont connectées chacune à au moins un connecteur 15 respectif. Les connecteurs sont disposés soit du même côté de l'écran (lampes en U) soit de part et d'autre de l'écran (lampes droites).

Les connecteurs 15 sont solidaires directement ou indirectement de l'écran 10, en général par soudure sur une partie métallique (carter 30 ou autre). Les lampes 11 connectées sont donc solidaires de l'écran 10 au moins par l'intermédiaire des connecteurs 15. En outre elles peuvent être solidaires de l'écran 10 par l'intermédiaire de clips 40 décrits ultérieurement.

Par ailleurs, l'écran, la dalle et le fond plat sont globalement rectangulaires.

Par convention, on entend par longueur le grand côté et par hauteur le petit côté du rectangle, que ce soit du fond, de la dalle ou de l'écran.

Généralement, les lampes sont alignées dans le sens de la longueur. Les connecteurs sont donc alignés dans le sens de la hauteur.

Sur l'un au moins des quatre rebords, l'écran peut comprendre également au moins une plaquette 13, recouvrant les connecteurs 15 et l'extrémité réelle des lampes connectées à ceux-ci, et étant munie d'évidements (ou encoches) 14 pour le passage desdites lampes vers les connecteurs 15. La plaquette 13 présente généralement une direction d'élongation dans le sens de la hauteur de l'écran. La plaquette 13 peut être solidaire ou non solidaire du fond.

La configuration d'une plaquette 13 est telle qu'elle recouvre les connecteurs 15 et au moins partiellement les lampes 11 qui y sont fixées. Ces connecteurs 15 ne sont donc pas toujours accessibles, ni visibles, même une fois que la dalle LCD et les éventuels filtres diffuseurs ont été retirés. Une plaquette 13 (tout comme d'autres éléments de la structure d'un écran comme un carter) peut donc gêner la déconstruction d'un écran en gênant/empêchant l'accès direct aux connecteurs 15.

Il est proposé ici un procédé de déconstruction au moins partielle d'un écran plat.

Dans ce contexte, on prévoit au préalable d'enlever la dalle 100, de préférence en conservant son intégrité, et les éventuels filtres diffuseurs de l'écran. Une partie au moins des lampes 11 et la plaquette 13 sont alors apparentes. Par souci de concision, on ne décrit qu'une seule plaquette.

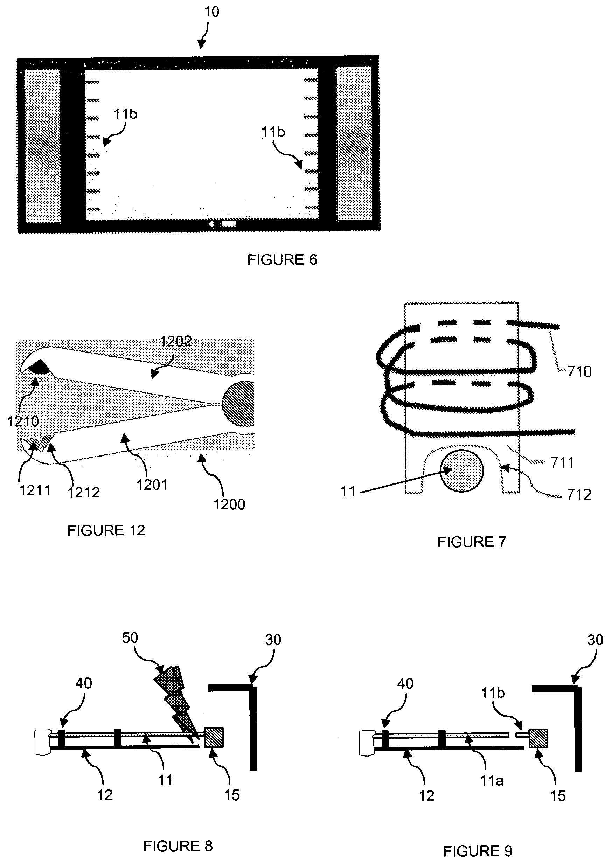

Dans un mode de réalisation, on prévoit de conserver l'intégrité de la plaquette 13. On peut alors désolidariser 120 d'au moins une à toutes les lampes 11 de l'écran 10 sans les casser par une étape de fonte du verre constituant ladite lampe 11 en au moins un point de fonte de ladite lampe 11, jusqu'à séparer celle-ci en au moins deux morceaux 11a, 11b de part et d'autre du point de fonte, comme illustré figure 9. Sur la figure 9 seule une extrémité d'une lampe est illustrée, avec un morceau principal 11a et un morceau 11b connecté à un connecteur 15. En mettant en oeuvre l'étape de fonte sur l'autre extrémité de la lampe, simultanément ou non, on obtient un deuxième point de fonte sur une même lampe 11, dont il résulte un autre morceau 11b connecté à un autre connecteur 15, le morceau central 11a pouvant alors être facilement enlevé, comme illustré sur la figure 6.

Dans un autre mode de réalisation, on prévoit une étape 110 consistant à retirer au moins partiellement la plaquette pour donner accès aux connecteurs, avant ou après l'étape fonte du verre constituant les lampes (11). Cette étape 110 de retrait au moins partiel peut comprendre une étape de découpe, de fonte et/ou d'arrachage au moins partiel de la plaquette 13.

### Profilométrie laser

Dans un mode de réalisation, on prévoit une étape 150 de profilométrie laser consistant à obtenir la topographie (tridimensionnelle), c'est-à-dire la position, l'orientation dans l'espace et les dimensions d'une partie au moins des lampes 11, ainsi que de la plaquette 13 ou d'une partie au moins de tout élément de l'écran autre que les lampes 11, de préférence dans le prolongement de celles-ci.

La profilométrie laser comporte les avantages suivants:
- bonne précision,
- compatible avec un écran incliné,
- technologie sans contact, non intrusive,
- choix de la longueur d'onde du laser possible en fonction des matériaux de l'écran, et
- temps de cycle théorique relativement faible.

Pour la profilométrie laser, un laser 20 projette un faisceau plan dont il résulte un trait de lumière 23, par exemple sur une zone de la plaquette et des lampes. Le laser est incliné d'un angle α donné, par exemple de 30° à 45°, par rapport à l'axe optique XX d'une caméra 21 qui scrute une zone 22 où le trait laser est projeté en réflexion, de manière à imager les déformations du trait dues au relief, c'est-à-dire à la géométrie du fond de l'écran, en l'espèce des lampes, de la plaquette ou tout autre élément de l'écran illuminé par le trait de lumière 23. De préférence, l'axe optique XX de la caméra 21 ou le plan laser est orthogonal au fond plat.

Le mouvement de la caméra 21 est solidaire du mouvement du laser 20, par exemple en étant portés tous deux par un bras robotisé (non illustré). Ce bras permet de produire un mouvement de translation (balayage) de l'ensemble caméra-laser notamment parallèlement et/ou perpendiculairement à la direction des lampes 11.

Si nécessaire, pour pouvoir balayer le côté opposé de l'écran, le robot fait pivoter l'ensemble caméra-laser de 180°, pour que le laser 20 se retrouve orienté de manière similaire dans l'autre sens.

La caméra 21 acquiert un ensemble d'images (échantillonnage) au cours du mouvement. On définit par dt l'intervalle de temps séparant deux images successives captées par la caméra.

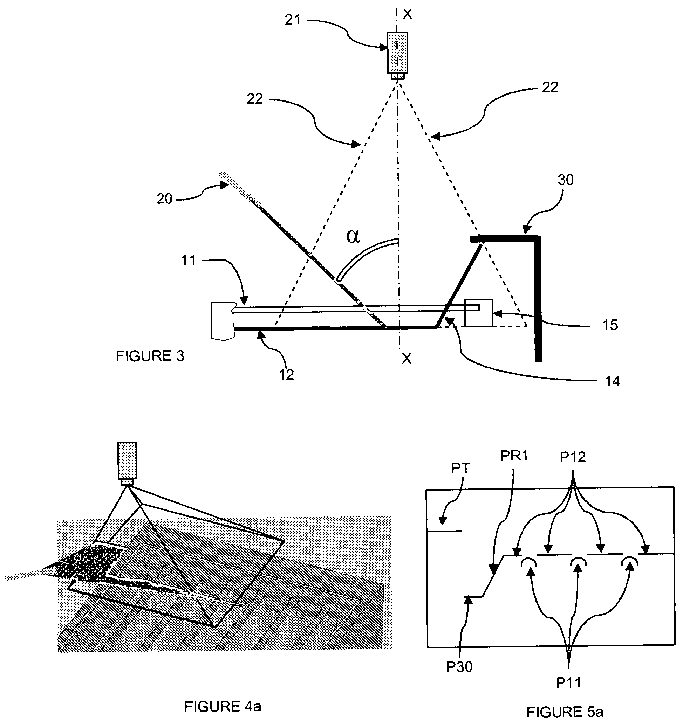

Sur chaque image, une ligne plus ou moins discontinue est observable (voir figure 5a à 5g). Cette ligne appelée profil représente la déformation du trait laser sur le relief illuminé par le trait de lumière 23, en l'espèce le relief des lampes 11 et de la plaquette 13.

### Balayage longitudinal

Dans un mode de réalisation, le balayage laser est longitudinal. Dans ce cas, le trait laser 23 (rectiligne) est sensiblement perpendiculaire à l'axe d'élongation des lampes, voir figure 4a à 4e. En l'espèce le trait laser 23 est sensiblement parallèle au petit côté de l'écran, et le mouvement de l'ensemble caméra-laser est en l'espèce parallèle à l'axe des lampes, et parallèle au grand côté de l'écran. Le sens du mouvement est en l'espèce centrifuge, c'est-à-dire de l'intérieur de l'écran vers le bord externe (carter 30) de l'écran, via les connecteurs 15, de manière à ce que le trait laser 23 passe d'abord sur les lampes 11 puis sur la plaquette 13 puis sur le bord externe (carter 30) de l'écran. Pour simplifier la présente description, seul ce mouvement est illustré sur les figures 4a à 4e et 5a à 5e. Dans un autre mode de réalisation non illustré, le mouvement est centripète, c'est-à-dire depuis l'extérieur de l'écran vers le bord externe (carter 30) de l'écran, puis les connecteurs, de manière à ce que le trait laser 23 passe d'abord sur le bord externe (carter 30) de l'écran, puis sur la plaquette 13, puis sur les lampes 11.

Les figures 4a à 4e illustrent de façon chronologique la position d'un ensemble caméra-laser pendant une étape de profilométrie laser avec un balayage longitudinal.

Les figures 5a à 5e illustrent l'image respective qui en résulte dans lesquelles le cadre illustre un écran de visualisation.

Sur la figure 4a, le trait laser est en amont de la plaquette 13. Il en résulte le profil correspondant figure 5a qui comprend :
- une ligne sensiblement droite discontinue P12 correspondant au fond 12,
- un ensemble d'arcs sensiblement circulaires P11 correspondant aux lampes 11,
- une ligne sensiblement droite continue PR1 correspondant au bord latéral R1,
- une ligne sensiblement droite continue P30 correspondant au carter 30, et
- une ligne sensiblement droite continue PT correspondant au support sur lequel était posé l'écran lors des mesures de profilométrie.

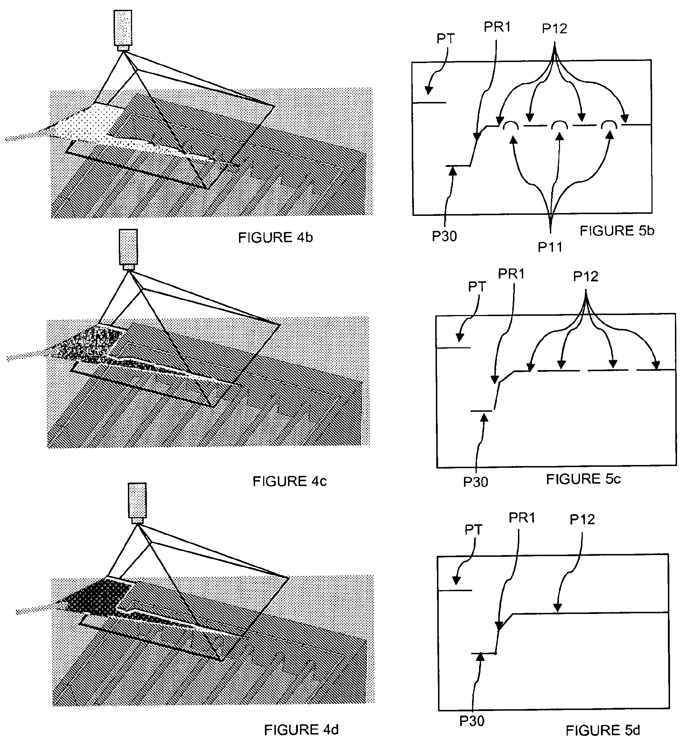

Sur la figure 4b, le trait laser est sur la plaquette 13 au dessous du sommet des lampes. Il en résulte le profil correspondant figure 5b dans lequel la distance relative sur l'écran de visualisation entre l'ensemble d'arcs sensiblement circulaires P11 correspondant aux lampes 11 et la ligne sensiblement droite discontinue P12 correspondant au fond 12 diminue par rapport à la figure 5a, du fait du mouvement de balayage centrifuge.

Sur la figure 4c, le trait laser est sur la plaquette 13 au dessus du sommet des lampes. Il en résulte le profil correspondant figure 5c dans lequel sur l'écran de visualisation, l'ensemble d'arcs sensiblement circulaires P11 correspondant aux lampes 11 ne sont plus visibles. La ligne sensiblement droite discontinue P12 correspond aux évidements 14 du fond 12.

Sur la figure 4d, le trait laser est sur la plaquette 13 au dessus du sommet des lampes et des évidements, et au-dessous du carter. Il en résulte le profil correspondant figure 5d dans lequel sur l'écran de visualisation, la ligne sensiblement droite P12 est alors continue.

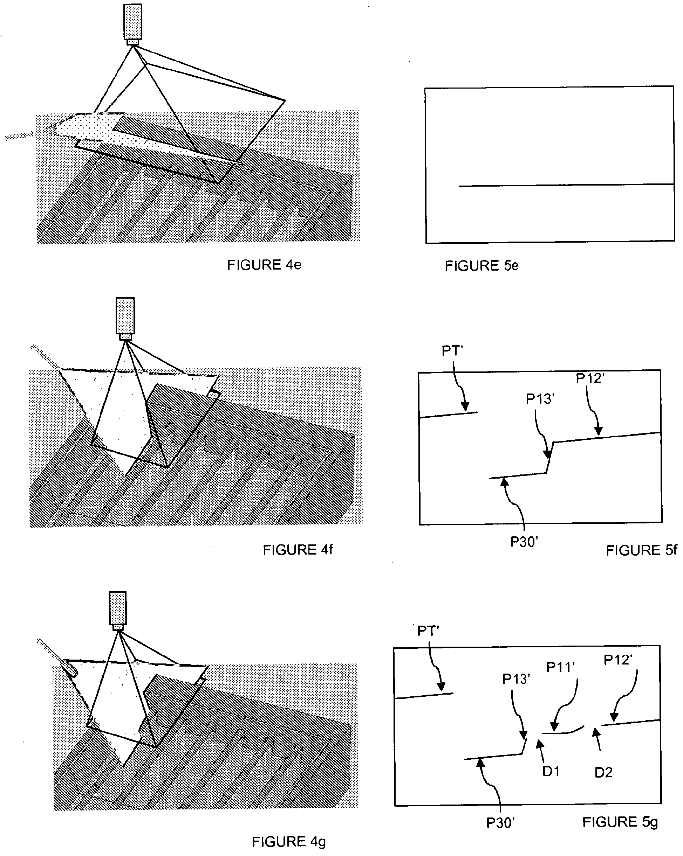

Sur la figure 4e, le trait laser est sur le carter. Il en résulte le profil correspondant figure 5e dans lequel sur l'écran de visualisation, oh n'observe qu'une ligne sensiblement droite et continue correspondant au balayage du carter.

Les images du profil obtenu permettent, par des algorithmes de traitement d'image connus, de détecter :
- les points correspondant au sommet S des lampes (points des lampes les plus hauts par rapport au fond plat),
- le(s) segment(s) de droite correspondant au fond plat,
- le (s) segment(s) de droite correspondant au sommet de la plaquette (par exemple par une grande majorité de ligne continue et rectiligne),
- le (s) segment(s) de droite correspondant au carter 30 (par exemple par un profil complètement rectiligne)
et d'en déduire, par exemple dans le repère du robot supportant le bras robotisé :
- les coordonnées 3D (trois dimensions) des points correspondant au sommet S des lampes 11,
- l'équation 3D du fond plat 12,
- l'équation 3D du plan de la plaquette 13,
- l'équation 3D des droites correspondant aux limites du plan de la plaquette au niveau du carter 30 (limite haute), au niveau du fond (limite basse) et/ou au niveau de la droite HL des points correspondant au sommet des lampes.

De ces informations, on déduit par régression, dans le plan de la plaquette, l'équation de la droite reliant les points correspondant au sommet S des lampes, ainsi que les limites basse, haute, et latérales de la plaquette. Généralement, le sommet S des lampes coïncide sensiblement avec le sommet des évidements 14.

Connaissant les différentes équations et coordonnées 3D, il est alors possible de déterminer les limites dans lesquelles doit être mise en oeuvre l'étape de fonte du verre des lampes, la position de chaque point de fonte et celle d'une position de référence.

En effet, la profilométrie permet de déterminer la position des tubes de verre des lampes 11 et les positions de leurs extrémités apparentes. Par « extrémité apparente » d'un tube en verre en lampe, on entend sur le profil obtenu tout changement dudit profil sur une distance supérieure à un seuil prédéterminé, ce qui correspond par exemple dans l'écran à la partie du tube recouvert par une plaquette ou un carter, ou connecté à un connecteur.

Typiquement, puisque l'ensemble d'arcs sensiblement circulaires P11 du profil représentent les lampes, on peut utiliser cette forme de profil pour asservir l'étape de fonte du verre des lampes, de sorte à garantir que celle-ci soit mise en oeuvre sur le verre d'une lampe et pas sur la plaquette ou le carter par exemple.

Une fois la position des extrémités des lampes déterminée, un dispositif ou outil de fonte (non illustré) peut par exemple être asservi pour fondre les tubes des lampes à une distance prédéterminée de ces extrémités.

Une position de référence peut être par exemple la position d'un connecteur, d'une extrémité apparente, d'un élément de structure de l'écran tel qu'un carter, voire une position externe à l'écran.

A cause de l'échantillonnage du balayage laser il est possible de ne pas obtenir d'image correspondant à l'instant précis où le laser 20 est positionné à l'extrémité réelle ou l'extrémité apparente d'une lampe.

En revanche, grâce au changement de la forme du profil, il est possible de déterminer si l'image obtenue correspond à un balayage du laser en amont (avant) ou en aval (après) de l'extrémité d'une lampe. On peut donc prévoir de sélectionner la dernière image obtenue avant le balayage de l'extrémité d'une lampe et considérer que le profil de cette image contient ladite extrémité (réelle ou apparente) de ladite lampe. Ce qui permet d'obtenir une marge de sécurité par exemple dans le positionnement du dispositif de chauffe décrit ci-après. La position de l'extrémité (réelle ou apparente) considérée dans cette dernière image obtenue peut par exemple servir de position de référence.

### Balayage multiple

Il est souhaitable que le trait couvre la totalité des lampes. A cet effet, la distance entre le laser 20 et l'écran peut être adaptée.

Or cette distance influence la résolution de la caméra 21 : plus l'écran est grand, plus il faut, pour un même ensemble laser-caméra, augmenter la distance laser/écran, donc plus la caméra 21 est également éloignée de l'écran, et plus la résolution est faible. Ainsi, la précision de mesure est fonction de la taille des écrans. De plus, l'augmentation de la distance entre la zone éclairée par le laser 20 et la caméra 21 réduit la puissance lumineuse atteignant le capteur de la caméra 21 : ceci réduit encore la précision de mesure.

Si le trait laser ne couvre pas la totalité des lampes, il est donc préférable de réaliser un balayage multiple de l'écran, en gardant la distance laser/écran constante pour tous les écrans. Le nombre de balayages dépend outre cette distance, des dimensions de l'écran, de la taille du champ scruté par la caméra 21 et de l'angle d'ouverture du plan lumière du laser.

Lors de chaque balayage, on détermine une équation en 3D dans le repère du robot de chaque objet de l'écran (lampes, plaquette, etc.) représenté par le profil grâce à un algorithme de calcul qui prend en entrée les informations géométriques (et références) de l'écran et qui génère des plans (équations 3D). Pour plusieurs balayages, on obtient plusieurs équations 3D de droite qui sont quasiment colinéaires (aux imprécisions de mesure près), soit -après régression- une seule et même équation, ce qui permet typiquement de calculer la position et les dimensions des différentes lampes.

On notera que si les équations obtenues pour chaque balayage sont trop différentes entre elles, le système peut alors lever une alarme. Une telle alarme peut correspondre soit à l'état de déformation de l'écran (abimé/déformé au niveau de la plaquette) donc la procédure de fonte risquerait de ne pas être adéquate, soit à une erreur de mesure. Il est alors possible d'évacuer l'écran vers d'autres moyens de découpe/désassemblage.

Alternativement au balayage multiple, on peut prévoir une pluralité d'ensembles caméra-laser. Pour chaque ensemble le laser a une lentille d'ouverture respective permettant d'avoir un trait plus ou moins étendu et la caméra a une focale plus ou moins courte (grand ou très grand angle).

L'ensemble caméra-laser est sélectionné selon la taille de l'écran. On peut alors n'effectuer qu'un seul balayage.

Au préalable, l'ensemble de vision caméra-laser a été calibré. La calibration, connue en soi dans ce domaine, consiste à faire correspondre des points de l'image 2D avec des coordonnées réelles 3D dans un repère donné, de manière à transcrire les informations recueillies dans les images en plans de coupe dans un repère de base. On définit de préférence comme repère de base celui du robot (de fonte). Ce qui permet de pouvoir effectuer un changement de repère pour toutes les coordonnées des points correspondants aux mouvements de l'ensemble caméra-laser et les différentes équations calculées entre le repère de l'ensemble caméra-laser et ce repère de base.

### Balayage latéral

Dans un autre mode de réalisation, alternatif ou complémentaire, le balayage laser est latéral. Dans ce cas, le trait laser (rectiligne) est quasi parallèle à l'axe d'élongation des lampes, voir figures 4f, 4g, 5f et 5g.

Sur la figure 4f, le trait laser est entre deux lampes adjacentes. Il en résulte le profil correspondant à la figure 5f qui comprend :
- une ligne sensiblement droite continue PT' correspondant au support sur lequel était posé l'écran lors des mesures de profilométrie,
- une ligne sensiblement droite continue P30' correspondant au carter 30.
- une ligne sensiblement droite continue P13' correspondant à la plaquette 13, et
- une ligne sensiblement droite continue P12' correspondant au fond 12,

Sur la figure 4g, le trait laser couvre partiellement une lampe et la plaquette. Il en résulte le profil correspondant figure 5g qui comprend :
- une ligne sensiblement droite continue PT' correspondant au support sur lequel était posé l'écran lors des mesures de profilométrie,
- une ligne sensiblement droite continue P30' correspondant au carter 30,
- une ligne sensiblement droite continue P13' correspondant à la plaquette 13,
- une ligne sensiblement courbée P11' correspondant à la lampe couverte par le laser, et
- une ligne sensiblement droite P12' correspondant au fond 12.
Sur la figure 5g, on notera deux discontinuités D1 et D2, de part et d'autre de la ligne sensiblement courbée P11'. Ces discontinuités sont dues aux réflexions du trait laser sur la surface courbe de la lampe qui n'atteignent pas la caméra.

En l'espèce le trait laser est quasi parallèle à la direction de la longueur du fond de l'écran. La longueur du trait laser recouvre la plaquette 13, ce qui permet de détecter les extrémités haute et basse de la plaquette à coup sûr. Par quasi parallèle, on entend que l'angle entre le trait laser et l'axe d'élongation des lampes est inférieur à 10 degrés et de préférence inférieur à 5 degrés. Dans ce cas, la direction du balayage est parallèle à la direction de la longueur du fond de l'écran. Par rapport au mode de réalisation précédent dans lequel la direction du balayage est perpendiculaire à la direction de la longueur du fond de l'écran, l'avantage est qu'un seul balayage suffit pour déterminer les extrémités latérales de la plaquette.

### Retrait des lampes

Les connecteurs peuvent être désolidarisés du fond de l'écran, par exemple en les désoudant. Les lampes peuvent être déconnectées des connecteurs ultérieurement.

Pour éviter que les lampes ne cassent sous leur propre poids et optimiser la réflexion de la lumière sur le fond, les lampes sont généralement maintenues à distance du fond par des oeillets ou des clips.

Les oeillets (non illustrés) sont des pièces en forme de disque dont le diamètre intérieur épouse le diamètre extérieur des lampes, et dont le diamètre extérieur est adapté à la hauteur des connecteurs par rapport au fond.

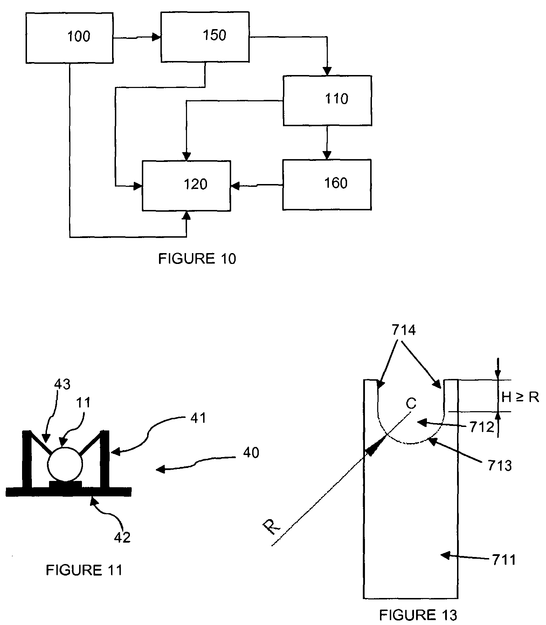

Les clips 40 (figure 11) sont des pièces, en général en plastique, comprenant un support 42 et deux chevalets 43, chaque chevalet étant monté sur un picot respectif 41, entre lesquels une lampe 11 peut être maintenue.

On peut prévoir de désolidariser les lampes des clips, par exemple en découpant ou en cassant les chevalets. Cette opération peut être mise en oeuvre manuellement, à l'aide d'outil tel qu'un marteau / burin ou tournevis, cutter, Dremel (Marque déposée), etc. Cette opération peut aussi être mise en oeuvre par un robot. A cet effet, il est souhaitable, lors de l'étape de profilométrie laser décrite précédemment, d'effectuer un balayage laser sur toute la surface de l'écran afin de déterminer au moins l'emplacement, et si possible la forme des picots et des chevalets, pour déterminer le plan de coupe des picots/chevalets.

On peut aussi prévoir de désolidariser d'abord les lampes en conservant les clips solidaires des lampes, puis dans une étape ultérieure de désolidariser les lampes et les clips.

### Fonte du verre des lampes

Pour désolidariser 120 une lampe 11 de l'écran 10 sans la casser, on prévoit avantageusement, en au moins un point de fonte de ladite lampe 11, une étape de fonte du verre constituant ladite lampe 11, jusqu'à séparer celle-ci en au moins deux morceaux 11a, 11b de part et d'autre du point de fonte.

La fonte consiste à ramollir le verre par voie thermique afin que celui-ci devienne et reste pâteux, de préférence pendant une durée déterminée.

L'étape de fonte est mise en oeuvre par un dispositif de chauffe dont la température d'utilisation, appelée température de fonte, est susceptible de faire fondre le verre constituant ladite lampe 11.

La durée pendant laquelle la température de fonte est appliquée au verre de la lampe dépend de la température de fonte et de la distance éventuelle entre le dispositif de chauffe et le verre.

Par exemple avec une lampe en verre borosilicate dont la température de fusion se situe entre 750°C et 850°C, on peut chauffer à une température de fonte de 1100°C pendant une durée inférieure à 5 secondes pour chaque point de fonte, le verre reste pâteux.

Chaque point de fonte est situé à une distance prédéterminée d'une position de référence. La distance prédéterminée peut être une valeur absolue ou relative, une distance comprise dans un ensemble de valeurs absolues ou dans un ensemble de valeurs relatives.

Par valeur absolue, on entend une distance dont la valeur est exprimée en unités de mesure, par exemple en centimètres. Par valeur relative, on entend une distance dont la valeur est exprimée en pourcentage de la longueur apparente du tube en verre (mesuré par profilométrie laser) en partant de la position de référence.

Par exemple le point de fonte est situé à une distance inférieure à 15% de la longueur apparente du tube en verre, ou compris entre 3 et 10 cm de la position de référence.

Dans un mode de réalisation, l'étape de fonte est mise en oeuvre par un dispositif de chauffe au contact du tube de ladite lampe, typiquement par pincement thermique.

### Pincement thermique

On peut également prévoir une étape 160 de pincement thermique du verre d'au moins une lampe, en amont de sa désolidarisation du fond de l'écran.

Le pincement thermique consiste à chauffer une pince 50 (figure 8) à haute température, c'est-à-dire une température suffisante pour faire fondre le verre dont les tubes des lampes sont constitués, et à appliquer la pince sur les lampes.

La pince est positionnée par un robot ou un opérateur de préférence le plus près possible des connecteurs.

L'actionnement de la pince fait fondre le verre, ce qui sépare la lampe en deux morceaux 11a, 11b (figure 9). La fonte du verre sur lui-même referme également, de manière étanche, le tube de chaque côté de la pince thermique, ce qui forme un bouchon hermétique à chaque morceau 11a, 11b qui limite la diffusion de mercure et permet de désolidariser 120 les lampes 11 de l'écran 10 sans les casser.

Pour cette opération, il est préférable de conserver les oeillets ou de maintenir les lampes dans leurs clips 40 afin de stabiliser les lampes et de les maintenir en position une fois découpées. Sinon les morceaux découpés 11a pourraient se casser en tombant sur le fond de l'écran. Ce qui facilite également la manipulation de la pince thermique.

Un (petit) morceau de lampe 11b reste généralement dans le connecteur. L'opérateur peut ensuite enlever manuellement ce morceau, rendu moins fragile par la diminution du bras de levier, et sans risquer de casser toute la lampe.

Le pincement thermique peut être effectué en complément des étapes décrites précédemment, par exemple lorsqu'une lampe est coincée dans son connecteur et que le connecteur reste solidaire du fond de l'écran.

Le pincement thermique peut être effectué en alternative au retrait au moins partiel de la plaquette. Dans ce cas, il doit être appliqué à toutes les lampes.

Toutefois, la pâte de verre peut adhérer à la pince thermique, ce pourquoi on peut prévoir une fonte sans contact entre le verre de la lampe et le dispositif de chauffe.

A cet effet, dans un mode de réalisation, l'étape de fonte est mise en oeuvre par un dispositif de chauffe distant du tube de ladite lampe 11, ledit dispositif comprenant un chalumeau et/ou une bobine d'induction.

La pression interne d'une lampe est inférieure à la pression atmosphérique, elle est en général inférieure ou égale à 100 mbar. Ainsi, même sans contact entre le dispositif de chauffe et le tube, la différence de pression entre l'intérieur de la lampe et l'environnement permet par la plasticité du verre fondu que celui-ci se referme sur lui-même et assure de fait l'étanchéité de chaque morceau 11a, 11b de part et d'autre du point de fonte.

Après la fonte on prévoit une étape de refroidissement du verre fondu, par exemple en éloignant le dispositif de chauffe ou en coupant l'alimentation en énergie de celui-ci. Lors du refroidissement du verre fondu, celui-ci se referme sur lui-même puis se solidifie, ce qui forme un bouchon hermétique à chaque morceau 11a, 11b.

Lors d'une mise en oeuvre d'un chalumeau pour une fonte par flamme, il est souhaitable de maitriser la température de flamme, le mélange gazeux utilisé, et la vitesse de flamme, qui risque de pouvoir éjecter des débris de verre pendant la fonte.

En outre, certains éléments de l'écran (le fond ou une plaquette par exemple) peuvent faire face à un risque d'inflammation.

L'utilisation d'un plasma a l'avantage d'être très rapide mais est complexe à mettre en oeuvre et vaporise le verre, ce qui pose de problèmes d'étanchéité.

Pour ces raisons, on ne décrit précisément qu'une étape de fonte par induction.

### Fonte par induction

On prévoit un dispositif de chauffe comprenant une bobine d'induction 710. La bobine d'induction permet de chauffer par induction un élément métallique de transmission thermique 711, dénommé « fourchette » par concision.

De préférence, la fourchette comprend un matériau possédant une haute résistance à l'oxydation, une bonne conductivité thermique et capable de conserver ses propriétés mécaniques à une température de l'ordre de 1000°C.

Par exemple, la fourchette peut comprendre au moins l'un des matériaux suivants : du cupronickel (CUNi3Si), de l'Inconel (marque déposée), un alliage nickel-chrome tel que du NIMONIC Alloy 75 (marque déposée), et du titane.

La fourchette comprend un évidement 712 permettant d'y insérer une partie au moins d'un tube de lampe 11, de préférence sans contact entre la fourchette et la lampe. On prévoit typiquement une distance de moins d'un centimètre entre la périphérique de la lampe et les plus proches parois 713, 714 de l'évidement 712. De préférence, la forme de l'évidement épouse au moins partiellement celle de la lampe, ce qui permet d'homogénéiser la chauffe. Avec une lampe tubulaire, l'évidement est avantageusement au moins partiellement cylindrique, dont le rayon est supérieur à celui du tube.

Par exemple, comme illustré figure 13, l'évidement 712 est un demi-cylindre de centre C et rayon R monté sur des flancs 714 plans, en l'espèce parallèles et de hauteur H supérieure ou égale au rayon R. Ainsi, un tube de rayon r<R peut être inséré dans l'évidement 712 sans contact avec les parois 713, 714. De préférence, le centre du tube est inséré de sorte à sensiblement coïncider avec le centre C du demi-cylindre, ce qui permet d'assurer une chauffe homogène du tube en verre au moins sur le demi cylindre du tube dont la distance radiale à l'évidement 712 est constante. Les flancs 714 permettent de pouvoir effectuer très facilement un mouvement relatif, au moins en translation et typiquement parallèle aux flancs, entre le tube en verre d'une lampe 11 et la fourchette. Ils permettent également de chauffer le tube, en l'espèce l'autre partie de la lampe c'est-à-dire le demi cylindre de la lampe dont la distance radiale à l'évidement 712 n'est pas constante. Ainsi une fourchette peut être amenée pardessus une lampe 11, la lampe est insérée dans son évidement dans un mouvement relatif, le chauffage par induction permet de faire fondre le verre puis la fourchette est retirée après la fonte, et ce de manière répétée pour un ensemble de lampes.

La forme de la fourchette permet une chauffe très localisée. De fait, les éléments (notamment le fond de l'écran) adjacents à la lampe subissant la chauffe ne risquent pas d'inflammation. En outre, l'induction étant à distance, le verre fondu ne colle pas à la fourchette, il n'y a donc pas de risque d'adhésion et de problème de nettoyage du dispositif de chauffe.

De préférence, on prévoit que l'étape de fonte soit mise en oeuvre simultanément en deux points de fonte pour une lampe donnée, par exemple en utilisant deux fourchettes par lampe. Une lampe est ainsi fondue en trois morceaux, deux morceaux dont chacun est potentiellement relié à un connecteur respectif, et un morceau central qui peut être retiré très facilement, par exemple à la main ou par une pince telle que décrite 1200 ci-après.

Pour un écran donné, on peut prévoir que l'étape de fonte soit mise en oeuvre en série, c'est-à-dire lampe par lampe ; ou en parallèle, c'est-à-dire plusieurs lampes simultanément.

### Rotation

On peut prévoir en outre une étape de rotation d'une lampe 11, de préférence autour de son axe d'élongation, pendant ou après l'étape de fonte.

La rotation du tube autour de son axe d'élongation permet au verre fondu de se replier sur lui-même, ce qui limite les coulures et facilite la préhension des morceaux de lampe, et ce qui favorise l'étanchéité de chaque morceau 11a, 11b.

L'étape de rotation autour de l'axe d'élongation d'une lampe est mise en oeuvre par un ensemble d'au moins trois roues 1210, 1211, 1212 en contact avec ladite lampe 11, dont au moins une roue est motorisée.

Par exemple l'ensemble d'au moins trois roues est porté par une pince 1200, les roues étant réparties sur les deux branches 1201, 1202 de la pince. Ainsi, lorsque la pince est activée, fermée, les roues 1210, 1211, 1212 viennent au contact du tube d'une lampe 11.

On peut prévoir par exemple une pince 1200 ou deux pinces, placée(s) entre deux points de fonte. Avantageusement, la pince peut également permettre le maintien de la lampe pendant la fonte du verre, ainsi que le déplacement du morceau désolidarisé après la fonte, par exemple vers une zone de stockage.

Une fois une lampe fondue en deux points de fonte, un morceau est retiré, par exemple par une pince, en particulier une pince telle que décrite ci-dessus, et deux morceaux restent connectés, chacune à un connecteur respectif.

Chaque morceau fondu connecté à un connecteur peut être désolidarisé de l'écran manuellement par un opérateur, en désolidarisant le morceau fondu de son connecteur et/ou en désolidarisant le connecteur de l'écran. La dimension du morceau fondu, couplée au fait qu'il n'est connecté qu'à un seul connecteur (alors que la lampe est en général connectée à deux connecteurs) rend cette désolidarisation beaucoup plus facile.

On peut également prévoir, après l'étape de fonte et le retrait des morceaux fondus entre deux points de fonte, une étape de découpe de l'écran sur toute son épaisseur entre les deux points de fonte, ce qui facilite encore l'ergonomie de l'accès aux connecteurs et aux morceaux fondus qui y sont connectés.

Les modes de réalisation précédents sont éventuellement combinables. Par exemple on peut prévoir une combinaison de l'étape de fonte et de pincement thermique, la pince thermique étant à température éventuellement ambiante.

## Revendications

1. Procédé de déconstruction au moins partielle d'un écran plat, l'écran (10) comprenant
des connecteurs (15) solidaires de l'écran (10),
des lampes (11) de rétro-éclairage connectées à au moins un connecteur (15) respectif, et solidaires de l'écran (10) par ce connecteur (15),
le procédé comprenant des étapes consistant à :
- lorsque l'écran (10) comprend une dalle, retirer au préalable (100) ladite dalle pour rendre les lampes (11) et la plaquette (13) apparentes, et
- désolidariser (120) les lampes (11) de l'écran (10) sans les casser,
**caractérisé en ce qu'**il comprend en outre, pour au moins une lampe (11) en au moins un point de fonte de ladite lampe (11),
- une étape de fonte du verre constituant ladite lampe (11), jusqu'à séparer celle-ci en au moins deux morceaux (11a, 11b) de part et d'autre de chaque point de fonte,
- ladite lampe (11) étant maintenue fixe dans les clips (40) pendant l'étape de fonte.

2. Procédé selon la revendication 1, dans lequel chaque point de fonte est situé à une distance prédéterminée d'une position de référence.

3. Procédé selon l'une quelconque des revendications précédentes, comprenant en outre une étape de profilométrie laser (150) consistant à obtenir la topographie tridimensionnelle au moins des lampes (11).

4. Procédé selon la revendication 3, dans lequel l'étape (150) de profilométrie laser comprend un balayage laser longitudinal et/ou latéral, éventuellement multiple de l'écran (10).

5. Procédé selon l'une quelconque des revendications précédente, dans lequel l'étape de fonte est mise en oeuvre par un dispositif de chauffe au contact du tube de ladite lampe (11).

6. Procédé selon la revendication 5, comprenant une étape (160) de pincement thermique du verre de ladite lampe (11).

7. Procédé selon l'une quelconque des revendications précédentes, dans lequel l'étape de fonte est mise en oeuvre par un dispositif de chauffe distant du tube de ladite lampe (11), ledit dispositif comprenant un chalumeau et/ou une bobine d'induction.

8. Procédé selon l'une quelconque des revendications précédentes, dans lequel chaque lampe (11) comprend une partie tubulaire qui présente un axe d'élongation, le procédé comprenant en outre pour chaque lampe (11) une étape de rotation de ladite lampe (11) autour de son axe d'élongation pendant ou après l'étape de fonte.

9. Procédé selon la revendication 8, dans lequel l'étape de rotation est mise en oeuvre par un ensemble d'au moins trois roues en contact de ladite lampe (11), dont au moins une roue est motorisée.

## Patentansprüche

1. Verfahren zur mindestens teilweisen Zerlegung eines Flachbildschirms, wobei der Bildschirm (10) Folgendes aufweist:
Verbinder (15), die mit dem Bildschirm (10) fest verbunden sind,
Hintergrundbeleuchtungslampen (11), die mit mindestens einem jeweiligen Verbinder (15) verbunden sind und durch diesen Verbinder (15) mit dem Bildschirm (10) fest verbunden sind,
das Verfahren Schritte aufweist, die aus Folgendem bestehen:
- wenn der Bildschirm (10) eine Bildschirmplatte aufweist, Ausbauen (100) dieser Bildschirmplatte im Voraus, so dass die Lampen (11) und die kleine Platte (13) sichtbar werden, und
- Lösen (120) der Lampen (11) von dem Bildschirm (10), ohne sie zu zerbrechen,
**dadurch gekennzeichnet, dass** es ferner für mindestens eine Lampe (11) an mindestens einem Punkt des Schmelzens der Lampe (11)
- einen Schritt des Schmelzens des Glases, das die Lampe (11) bildet, aufweist, bis dieses in mindestens zwei Teile (11a, 11b) auf beiden Seiten von jedem Punkt des Schmelzens getrennt wird,
- wobei die Lampe (11) während des Schrittes des Schmelzens in den Clips (40) festgehalten wird.

2. Verfahren nach Anspruch 1, wobei jeder Punkt des Schmelzens in einem vorbestimmten Abstand von einer Referenzposition angeordnet ist.

3. Verfahren nach einem der vorhergehenden Ansprüche, ferner umfassend einen Schritt der Laserprofilometrie (150), der darin besteht, die dreidimensionale Topographie mindestens der Lampen (11) zu erhalten.

4. Verfahren nach Anspruch 3, wobei der Schritt (150) der Laserprofilometrie eine möglicherweise mehrmalige Laserabtastung des Bildschirms (10) in Längs- und/oder Querrichtung aufweist.

5. Verfahren nach einem der vorhergehenden Ansprüche, wobei der Schritt des Schmelzens durch eine Heizvorrichtung in Kontakt mit der Röhre der Lampe (11) durchgeführt wird.

6. Verfahren nach Anspruch 5, das einen Schritt (160) der thermischen Einschnürung des Glases der Lampe (11) aufweist.

7. Verfahren nach einem der vorhergehenden Ansprüche, wobei der Schritt des Schmelzens durch eine Heizvorrichtung, die von der Röhre der Lampe (11) entfernt ist, durchgeführt wird, wobei die Vorrichtung einen Schneidbrenner und/oder eine Induktionsspule aufweist.

8. Verfahren nach einem der vorhergehenden Ansprüche, wobei die Lampe (11) einen röhrenförmigen Teil aufweist, der eine Elongationsachse aufweist, wobei das Verfahren ferner für jede Lampe (11) einen Schritt des Drehens der Lampe (11) um ihre Elongationsachse während oder nach dem Schritt des Schmelzens aufweist.

9. Verfahren nach Anspruch 8, wobei der Schritt des Drehens durch eine Anordnung von mindestens drei Rädern in Kontakt mit der Lampe (11) durchgeführt wird, wovon mindestens ein Rad motorisiert ist.

## Claims

1. Method for at least partially deconstructing a flat screen, the screen (10) comprising
connectors (15) secured to the screen (10), back-lighting lamps (11) connected to at least one respective connector (15), and secured to the screen (10) by this connector (15),
the method comprising steps consisting in:
- when the screen (10) comprises a faceplate, previously removing (100) said faceplate to leave the lamps (11) and the panel (13) visible, and
- separating (120) the lamps (11) from the screen (10) without breaking them,
**characterized in that** it further comprises, for at least one lamp (11) at at least one melting point of said lamp (11),
- a step of melting of the glass forming said lamp (11), until the latter is separated into at least two pieces (11a, 11b) on either side of each melting point,
- said lamp (11) being held secured in the clips (40) during the melting step.

2. Method according to Claim 1, in which each melting point is situated at a predetermined distance from a reference position.

3. Method according to any one of the preceding claims, further comprising a step of laser profilometry (150) consisting in obtaining the three-dimensional topography at least of the lamps (11).

4. Method according to Claim 3, in which the step (150) of laster profilometry comprises a longitudinal and/or lateral laser scan, possibly multiple such scans of the screen (10).

5. Method according to any one of the preceding claims, in which the melting step is implemented by a heating device in contact with the tube of said lamp (11).

6. Method according to Claim 5, comprising a step (160) of thermal pinching of the glass of said lamp (11).

7. Method according to any one of the preceding claims, in which the melting step is implemented by a heating device remote from the tube of said lamp (11), said device comprising a torch and/or an induction coil.

8. Method according to any one of the preceding claims, in which each lamp (11) comprises a tubular part which has an axis of elongation, the method further comprising, for each lamp (11), a step of rotation of said lamp (11) about its axis of elongation during or after the melting step.

9. Method according to Claim 8, in which the rotation step is implemented by a set of at least three wheels in contact with said lamp (11), of which at least one wheel is motorized.
